# FASCICULE DE BREVET EUROPEEN

(11) **EP 4 326 605 B1**
(45) Date de publication et mention de la délivrance du brevet: **09.09.2026**
(21) Numéro de dépôt: 22719948.6
(22) Date de dépôt: 19.04.2022
(51) Int. Cl.: B62K 5/02, B62K 5/10

(54) **ENGIN DE MOBILITÉ INCLINABLE**
SCHWENKBARES MOBILITÄTSFAHRZEUG
TILTABLE MOBILITY VEHICLE

(30) Priorité: 21.04.2021 FR 2104155
(43) Date de publication de la demande: 28.02.2024
(73) Titulaire: VALEO EMBRAYAGES, 80009 Amiens (FR); Cycleurope Industries, 10100 Romilly-Sur-Seine (FR)
(72) Inventeur: LAURENS, Christophe, 38070 SAINT QUENTIN FALLAVIER (FR); MORTAL, Jérôme, 38070 ST QUENTIN FALLAVIER (FR); CONSIGNY, Cédric, 10100 ROMILLY-SUR-SEINE (FR)
(74) Mandataire: Condorcet IP
(86) Numéro de dépôt international: PCT/EP2022/060316
(87) Numéro de publication internationale: WO 2022/223562

(56) Documents cités:
- EP-B1- 0 686 112
- WO-A1-2019/162714
- DE-A1- 4 124 926
- JP-A- H0 585 451

## Description

La présente invention concerne un engin de mobilité inclinable, et plus précisément un système de transmission et d'inclinaison pour un engin de mobilité inclinable avec trois roues, du type tricycle. Le document WO2019/162714A1 montre le préambule de la revendication 1.

Les engins de mobilités de la présente invention sont par exemple des engins de mobilité avec une roue avant et deux roues arrières, l'ensemble étant relié par l'intermédiaire d'un dispositif d'inclinaison. Plus précisément, les engins de mobilité de la présente invention sont par exemple des tricycles monoplaces ou biplaces tandem, ou des triporteurs.

De tels engins avec une architecture de base proche de celle d'un vélo sont souvent instables lors de virage. En effet, le cadre est soumis à la force centrifuge essentiellement due à la masse du conducteur et tend à s'incliner vers l'extérieur dans un virage. Une telle position du cadre rend la conduite délicate, voire dangereuse. De plus, le conducteur peut être amené malgré lui à commander l'inclinaison du cadre dans le mauvais sens.

Il est donc important qu'un tel engin de mobilité comporte un dispositif d'inclinaison compensant la force centrifuge, permettant également de gérer le basculement de l'engin latéralement et d'amortir les chocs, en empêchant une des roues arrières de se soulever du sol.

Il est connu aujourd'hui, des dispositifs permettant de réaliser ces fonctions avec des doubles engrenages et des doubles roulements. Ces dispositifs sont complexes et imposent un nombre important de pièces, ce qui complexifie leur montage, augmente leur coût et l'encombrement de l'engin de mobilité.

La présente invention a donc pour objet de pallier un ou plusieurs des inconvénients des dispositifs de l'art antérieur en proposant un engin de mobilité comportant un dispositif d'inclinaison simplifié et amélioré.

Pour cela la présente invention propose un engin de mobilité comportant une partie avant avec une roue avant et une partie arrière avec deux roues arrières, la partie avant est articulée par rapport au reste de l'engin, la liaison entre la partie avant et la partie arrière est réalisée par un système de transmission et inclinaison disposé entre la partie avant et la partie arrière de l'engin, le système de transmission et inclinaison comportant deux rotules et un dispositif de transmission.

Un tel système permet de limiter les pièces et de réduire les coûts, tout en garantissant une inclinaison stable.

Selon un mode de réalisation de l'invention, les deux rotules et le dispositif de transmission sont fixés à la fois à la partie avant et à la partie arrière de l'engin.

Selon un mode de réalisation de l'invention, chaque partie de l'engin comporte un bras sur lequel sont fixés les deux rotules et le dispositif de transmission selon l'axe longitudinale Xe de l'engin.

Selon un mode de réalisation de l'invention, une première rotule est en liaison avec un bras avant de la partie avant de l'engin de mobilité et avec un bras arrière de la partie arrière, une deuxième rotule est en liaison avec un bras avant de la partie avant de l'engin de mobilité et avec un bras arrière de la partie arrière, les deux rotules permettant ainsi la rotation de la partie avant par rapport à la partie arrière.

Selon un mode de réalisation de l'invention, les rotules sont disposées sur les bras de façon à être décalées selon l'axe Xe, le dispositif de transmission étant disposé entre les deux rotules.

Selon un mode de réalisation de l'invention, le dispositif de transmission est formé par un cardan.

Selon un mode de réalisation de l'invention, le dispositif de transmission comporte un joint en U ou homocinétique.

Selon un mode de réalisation de l'invention, le dispositif de transmission reçoit le mouvement de la partie avant de l'engin via une chaine primaire, et le transmet aux roues arrières.

Selon un mode de réalisation de l'invention, la transmission du mouvement des roues arrières par le dispositif de transmission se fait par un différentiel arrière, ou une pignonnerie, via une chaîne secondaire.

La présente invention concerne également, un engin de mobilité selon l'invention, dans lequel l'engin de mobilité est un tricycle, et par exemple un tricycle à assistance électrique. D'autres buts, caractéristiques et avantages de l'invention seront mieux compris et apparaîtront plus clairement à la lecture de la description faite, ci-après, en se référant aux figures annexées, données à titre d'exemple et dans lesquelles:
- la [Fig. 1] est une représentation schématique d'un engin de mobilité selon l'invention,
- la [Fig. 2] est une représentation schématique d'un engin de mobilité selon l'invention vue de dessus.

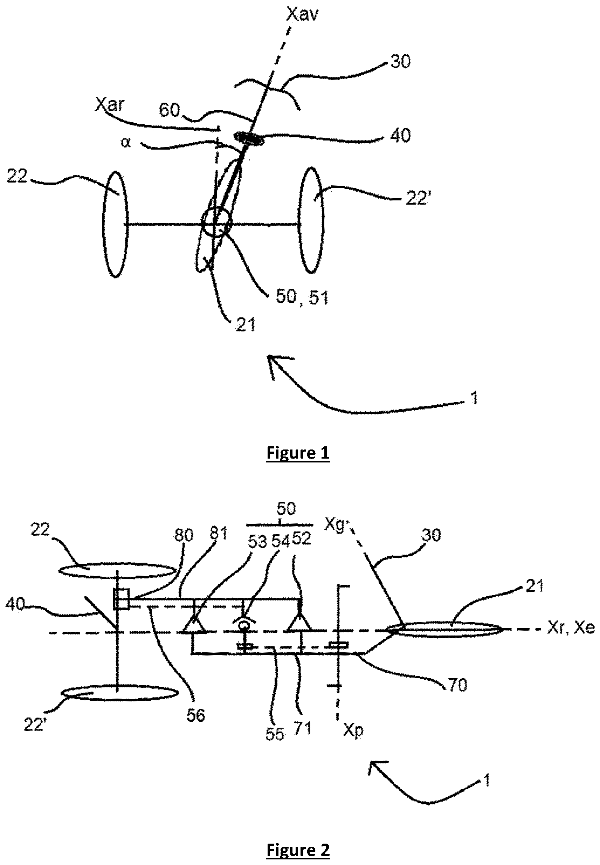

La [Fig. 1] illustre un engin 1 de mobilité selon l'invention. L'engin 1 comporte une roue avant 21 et deux roues arrière 22, 22'.

Selon un mode de réalisation de l'invention, l'engin 1 de mobilité est un tricycle.

Selon un mode de réalisation de l'invention, le tricycle est à assistance électrique et comporte un dispositif de changement de vitesse et un moteur électrique. Le moteur électrique est agencé pour assurer une partie de la propulsion de l'engin 1.

L'engin 1 comporte au moins trois roues 21, 22, 22', dont deux roues auxquelles est fournie une force motrice. La force motrice est fournie par l'intermédiaire de deux pédales, ou équivalent, tournant autour d'un axe de pédalier Xp qui entraîne les roues arrières par exemple avec une chaîne, ou tout autre moyen de transmission, lors de son utilisation.

L'engin comporte un guidon 30 permettant d'orienter la roue avant 21. La roue avant 21 est reliée aux deux roues arrières 22, 22'. Les deux roues arrières 22, 22' sont également reliées entre-elles.

Selon un mode de réalisation de l'invention, l'engin 1 comporte un moyen d'assise 40 pour l'utilisateur.

La roue avant 21, le guidon 30 et le moyen d'assise 40 sont reliés entre eux par un cadre 60, disposés au niveau de la partie avant 70 de l'engin 1. Cette partie avant 70 avec cadre est inclinée lors de l'utilisation de l'engin 1. La roue avant 21 est articulée par rapport au reste de l'engin 1, au niveau de l'axe Xg du guidon 30 illustré à la [Fig. 2]. Cette articulation permet d'orienter la roue avant vers la droite ou la gauche, par rapport à la direction d'utilisation de l'engin 1.

Les roues arrières 22, 22' sont disposées au niveau de la partie arrière 80 de l'engin 1.

L'engin 1 comporte également une unité de pilotage ainsi que plusieurs capteurs situés par exemple au niveau du pédalier, sur le cadre du vélo ou au niveau d'une roue.

Selon un mode de réalisation de l'invention, l'engin 1 comporte également un dispositif de stockage d'énergie, par exemple sous forme d'une batterie, un système d'éclairage, un pédalier, un système de localisation et/ou navigation ainsi qu'un système interface homme-machine comportant notamment un écran tactile apte à afficher des informations et/ou prendre en compte les demandes dudit utilisateur.

Les roues 21, 22, 22' sont munies d'un système de freinage, comportant notamment des freins à disque.

L'engin 1 comporte un dispositif de changement de vitesse.

La liaison entre la partie avant 70 et la partie arrière 80 est réalisée avec un moyen de rotation 51. Ce moyen de rotation 51 permet le pivotement de la partie avant 70 par rapport à la partie arrière 80 qui forme un angle d'inclinaison α. L'angle α est défini entre l'axe Xav de la partie avant et l'axe Xar de la partie arrière 80. L'axe Xar est l'axe perpendiculaire à l'axe reliant les deux roues arrières 22, 22'.

Dans le cadre de l'invention, l'engin comporte un système de transmission et inclinaison 50 disposé entre la partie avant 70 et la partie arrière 80 de l'engin 1, illustré à la [Fig. 2]. Ce système 50 permet la liaison entre la partie avant 70 et la partie arrière 80 et permet le pivotement de la partie 70 avant par rapport à la partie arrière 80.

Selon un mode de réalisation de l'invention, le système de transmission et inclinaison 50 comporte deux rotules 52, 53 et un dispositif de transmission 54. L'axe passant par les rotules matérialise l'axe de rotation Xr entre la partie avant 70 et la partie arrière 80. L'axe de rotation Xr est confondu avec l'axe longitudinale Xe de l'engin allant de la roue avant 21 vers un point central entre les deux roues arrières 22, 22'.

Selon un mode de réalisation de l'invention, une première rotule 52 est en liaison avec un bras avant 71 de la partie avant 70 de l'engin 1 de mobilité et avec un bras arrière 81 de la partie arrière 80. Une deuxième rotule 53 est en liaison avec un bras avant 71 de la partie avant 70 de l'engin 1 de mobilité et avec un bras arrière 81 de la partie arrière 80. Ces deux rotules 52, 53 permettent ainsi la rotation de la partie avant 70 par rapport à la partie arrière 80.

Les rotules sont disposées sur les bras de façon à être décalées selon l'axe Xe. La première rotule 52 est disposée vers l'avant du bras avant 71 et la deuxième rotule 53 est disposée vers l'arrière du bras arrière 81 de l'engin 1.

L'avant et l'arrière étant défini par rapport à un sens de circulation de l'engin 1 en marche avant.

Selon un mode de réalisation de l'invention, les deux bras 71, 81 sont parallèles l'un par rapport à l'autre.

Dans le cadre de l'invention, le dispositif de transmission 54 est disposé entre les deux rotules 52, 53. Chacune des extrémités du dispositif de transmission 54 est fixée à un bras 71, 81.

Selon un mode de réalisation, le dispositif de transmission 54 est formé par un cardan 54.

Selon un mode de réalisation, le dispositif de transmission 54 comporte un joint en U ou homocinétique.

Le centre de rotation du dispositif de transmission 54 est également situé sur l'axe Xe, Xr, pour respecter l'axe central de basculement.

Le dispositif de transmission 54 reçoit le mouvement de la partie avant 70 de l'engin 1 via une chaine primaire 55, et le transmet aux roues arrières 22, 22'. La transmission du mouvement arrière à un différentiel arrière, ou une pignonnerie, par le dispositif de transmission 54 est réalisé avec une chaîne secondaire 56. Cela peut permettre d'utiliser un système de différentiel arrière simple sans carter, sans localisation précise nécessaire et sans huile.

Un engin 1 de mobilité équipé d'un tel système de de transmission et inclinaison 50 permet une inclinaison de la partie avant, une certaine liberté de mouvement, dans les virages et offre une optimisation de la stabilité à l'arrêt et dans les virages. Plus précisément, le système 50 permet l'inclinaison de la partie avant, tout en transmettant correctement le mouvement aux roues arrières qui restent à l'horizontale.

Selon un mode de réalisation de l'invention, le système de de transmission et inclinaison 50 permet un angle d'inclinaison α maximal de 20 degrés +/-5degrés.

La portée de la présente invention ne se limite pas aux détails donnés ci-dessus et permet des modes de réalisation sous de nombreuses autres formes spécifiques sans s'éloigner du domaine d'application de l'invention. Par conséquent, les présents modes de réalisation doivent être considérés à titre d'illustration, et peuvent être modifiés sans toutefois sortir de la portée définie par les revendications.

## Revendications

1. Engin de mobilité (1) comportant une partie avant (70) avec une roue avant (21) et une partie arrière (80) avec deux roues arrières (22, 22'), la partie avant (70) est articulée par rapport au reste de l'engin (1), la liaison entre la partie avant (70) et la partie arrière (80) est réalisée par un système de transmission et inclinaison (50),
**caractérisé en ce que** le système de transmission et inclinaison (50) comporte deux rotules (52, 53) et un dispositif de transmission (54) formé par un cardan (54) recevant le mouvement de la partie avant (70) de l'engin (1) via une chaine primaire (55), et le transmettant aux roues arrières (22, 22'), et
la transmission du mouvement des roues arrières (22, 22') par le dispositif de transmission (54) se fait par un différentiel arrière via une chaîne secondaire (56).

2. Engin de mobilité (1) selon la revendication 1, dans lequel les deux rotules (52, 53) et le dispositif de transmission (54) sont fixés à la fois à la partie avant (70) et à la partie arrière (80) de l'engin (1).

3. Engin de mobilité (1) selon la revendication 2, dans lequel chaque partie (70, 80) de l'engin (1) comporte un bras (71, 81) sur lequel sont fixés les deux rotules (52, 53) et le dispositif de transmission (54) selon l'axe longitudinale Xe de l'engin (1).

4. Engin de mobilité (1) selon une des revendication 1 à 3, dans lequel une des deux rotules (52) est en liaison avec un bras avant (71) de la partie avant (70) de l'engin (1) de mobilité et avec un bras arrière (81) de la partie arrière (80), une autre des deux rotules (53) est en liaison avec un bras avant (71) de la partie avant (70) de l'engin (1) de mobilité et avec un bras arrière (81) de la partie arrière (80), les deux rotules (52, 53) permettant ainsi la rotation de la partie avant (70) par rapport à la partie arrière (80).

5. Engin de mobilité (1) selon la revendication 3, dans lequel les rotules (52, 53) sont disposées sur les bras (71, 81) de façon à être décalées selon l'axe Xe, le dispositif de transmission (54) étant disposé entre les deux rotules (52, 53).

6. Engin de mobilité (1) selon une des revendications 1 à 5, dans lequel le dispositif de transmission (54) comporte un joint en U ou homocinétique.

7. Engin de mobilité (1) selon une des revendications 1 à 6, dans lequel l'engin (1) de mobilité est un tricycle, et par exemple un tricycle à assistance électrique.

## Patentansprüche

1. Mobilitätsfahrzeug (1) mit einem Vorderteil (70) mit einem Vorderrad (21) und einem Hinterteil (80) mit zwei Hinterrädern (22, 22'), wobei das Vorderteil (70) in Bezug auf den Rest des Fahrzeugs (1) gelenkig verbunden ist, wobei die Verbindung zwischen dem Vorderteil (70) und dem Hinterteil (80) durch ein Übertragungs- und Neigungssystem (50) hergestellt wird, **dadurch gekennzeichnet, dass** das Übertragungs- und Neigungssystem (50) zwei Kugelgelenke (52, 53) und eine Übertragungsvorrichtung (54) umfasst, die durch ein Kardangelenk (54) gebildet ist, das die Bewegung des Vorderteils (70) des Fahrzeugs (1) über eine Primärkette (55) aufnimmt und auf die Hinterräder (22, 22') überträgt, und die Übertragung der Bewegung der Hinterräder (22, 22') durch die Übertragungsvorrichtung (54) über ein hinteres Differenzial über eine Sekundärkette (56) erfolgt.

2. Mobilitätsfahrzeug (1) nach Anspruch 1, wobei die zwei Kugelgelenke (52, 53) und die Übertragungsvorrichtung (54) sowohl am Vorderteil (70) als auch am Hinterteil (80) des Fahrzeugs (1) befestigt sind.

3. Mobilitätsfahrzeug (1) nach Anspruch 2, wobei jedes Teil (70, 80) des Fahrzeugs (1) einen Arm (71, 81) umfasst, an dem die zwei Kugelgelenke (52, 53) und die Übertragungsvorrichtung (54) entlang der Längsachse Xe des Fahrzeugs (1) befestigt sind.

4. Mobilitätsfahrzeug (1) nach einem der Ansprüche 1 bis 3, wobei eines der zwei Kugelgelenke (52) in Verbindung mit einem vorderen Arm (71) des Vorderteils (70) des Mobilitätsfahrzeugs (1) und mit einem hinteren Arm (81) des Hinterteils (80) steht, ein anderes der zwei Kugelgelenke (53) in Verbindung mit einem vorderen Arm (71) des Vorderteils (70) des Mobilitätsfahrzeugs (1) und mit einem hinteren Arm (81) des Hinterteils (80) steht, wodurch die zwei Kugelgelenke (52, 53) so die Drehung des Vorderteils (70) in Bezug auf das Hinterteil (80) ermöglichen.

5. Mobilitätsfahrzeug (1) nach Anspruch 3, wobei die Kugelgelenke (52, 53) so an den Armen (71, 81) angeordnet sind, dass sie entlang der Achse Xe versetzt sind, wobei die Übertragungsvorrichtung (54) zwischen den zwei Kugelgelenken (52, 53) angeordnet ist.

6. Mobilitätsfahrzeug (1) nach einem der Ansprüche 1 bis 5, wobei die Übertragungsvorrichtung (54) ein U-Gelenk oder Gleichlaufgelenk umfasst.

7. Mobilitätsfahrzeug (1) nach einem der Ansprüche 1 bis 6, wobei das Mobilitätsfahrzeug (1) ein Dreirad und beispielsweise ein elektrisch unterstütztes Dreirad ist.

## Claims

1. Mobility vehicle (1) comprising a front part (70) with a front wheel (21) and a rear part (80) with two rear wheels (22, 22'), the front part (70) is articulated with respect to the rest of the vehicle (1), the connection between the front part (70) and the rear part (80) is made by a transmission and tilting system (50), **characterized in that** the transmission and tilting system (50) comprises two ball joints (52, 53) and a transmission device (54) formed by a cardan joint (54) receiving the movement of the front part (70) of the vehicle (1) via a primary chain (55), and transmitting it to the rear wheels (22, 22'), and the transmission of the movement of the rear wheels (22, 22') by the transmission device (54) is performed by a rear differential via a secondary chain (56).

2. Mobility vehicle (1) according to claim 1, wherein the two ball joints (52, 53) and the transmission device (54) are fixed to both the front part (70) and the rear part (80) of the vehicle (1).

3. Mobility vehicle (1) according to claim 2, wherein each part (70, 80) of the vehicle (1) comprises an arm (71, 81) on which are fixed the two ball joints (52, 53) and the transmission device (54) along the longitudinal axis Xe of the vehicle (1).

4. Mobility vehicle (1) according to one of claims 1 to 3, wherein one of the two ball joints (52) is in connection with a front arm (71) of the front part (70) of the mobility vehicle (1) and with a rear arm (81) of the rear part (80), another of the two ball joints (53) is in connection with a front arm (71) of the front part (70) of the mobility vehicle (1) and with a rear arm (81) of the rear part (80), the two ball joints (52, 53) thus allowing the rotation of the front part (70) with respect to the rear part (80).

5. Mobility vehicle (1) according to claim 3, wherein the ball joints (52, 53) are arranged on the arms (71,81) so as to be offset along the axis Xe, the transmission device (54) being arranged between the two ball joints (52, 53).

6. Mobility vehicle (1) according to one of claims 1 to 5, wherein the transmission device (54) comprises a U-joint or constant velocity joint.

7. Mobility vehicle (1) according to one of claims 1 to 6, wherein the mobility vehicle (1) is a tricycle, and for example an electrically assisted tricycle.
